Europäisches Patentamt

European Patent Office

Office européen des brevets

(19)

(11) Publication number: **0 245 966**

**A2**

## (12) EUROPEAN PATENT APPLICATION

(21) Application number: **87303287.4**

(22) Date of filing: **14.04.87**

(51) Int. Cl.⁴: **C08L 77/00** , **C08L 51/06** , **C08L 23/02** , **C08K 5/54**

(30) Priority: **14.04.86 JP 84265/86**

(43) Date of publication of application:
**19.11.87 Bulletin 87/47**

(84) Designated Contracting States:
**ES**

(71) Applicant: **TONEN SEKIYU KAGAKU K.K.**
**1-1, Tsukiji, 4-Chome**
**Chuo-Ku Tokyo 104(JP)**

(72) Inventor: **Kitano, Kissho**
**4-2-225 Nishitsurugaoka 1-chome**
**Ooi-machi, Iruma-gun, Saitama-ken(JP)**
Inventor: **Fujita, Yuji**
**4-3-321 Nishitsurugaoka 1-chome**
**Ooi-machi Iruma-gun, Saitama-ken(JP)**
Inventor: **Sakaizawa, Masao**
**4-6 Nishitsurugaoka 1-chome, Ooi-machi**
**Iruma-gun, Saitama-ken(JP)**
Inventor: **Sakuma, Masato**
**17-12 Harigaya 2-chome**
**Urawa-shi Saitama-ken(JP)**
Inventor: **Yagi, Yukihiko**
**4-6, Nishitsurugaoka 1-chome**
**Ooi-machi Iruma-gun, Saitama-ken(JP)**
Inventor: **Yamamoto, Noboru**
**52-13-101 Hayamiya 1-chome**
**Nerima-ku, Tokyo(JP)**

(74) Representative: **Holmes, Michael John et al**
**Frank B. Dehn & Co. Imperial House 15-19**
**Kingsway**
**London WC2B 6UZ(GB)**

(54) **Thermoplastic resin composition.**

(57) A thermoplastic resin composition comprising 5 to 95 parts by weight of a modified polyolefin (A) or said modified polyolefin diluted with a polyolefin and 5 to 95 parts by weight of polyamide (B), said modified polyolefin being grafted with an unsaturated carboxylic acid or a derivative thereof and a silane compound.

# THERMOPLASTIC RESIN COMPOSITION

## Field of industrial application

The present invention relates to a thermoplastic resin composition superior in compatibility, i.e., miscibility and mechanical properties which is composed of a modified polyolefin and a polyamide.

## Prior Art

It is known that a composition having the properties of both a crystalline polyolefin and a polyamide can be obtained by blending them. Attempts have been made to obtain a blended resin composition having the characteristic properties of both polypropylene and polyamide for the purpose of improving the mechanical properties and heat resistance of polypropylene representing crystalline polyolefins and reducing the water absorption of polyamide and thereby avoiding the deterioration of physical properties of polyamide caused by water absorption. This object is not achieved by the mere blending of polypropylene and polyamide by melt-mixing. Mere blending provides a mixture which is subject to phase separation and is poor in surface gloss and mechanical strength, because they are poorly miscible with each other. Several compositions with improved miscibility have been proposed. For example, there are disclosed a composition produced from a crystalline or low-crystalline polyolefin partly or entirely modified with an acid anhydride or derivative thereof (Japanese Patent Laid-open Nos. 123158/1979, 232135/1984, 118735/1985, 110740/1985); a composition produced from a modified polyolefin in which metal atoms are bonded (Japanese Patent Laid-open Nos. 167740/1981 and 74143/1984); and a composition produced from a silane-modified polypropylene (Japanese Patent Laid-open No. 45653/1977).

## Problems to be solved by the invention

The conventional composition is improved in miscibility owing to the modified polyolefin; but it is not sufficiently improved in mechanical strength.

It is an object of the present invention to provide a composition which is free of the problems involved in the conventional compositions. The composition of the invention has improved miscibility of polyolefin and polyamide and also has improved mechanical properties, especially tensile strength and stiffness.

## Means to solve the problem

In order to eliminate the drawbacks involved in the conventional compositions, the present inventors carried out a series of researches, which led to the findings that the object is achieved by compounding a modified polyolefin grafted with an acid anhydride or derivative thereof and a silane compound. The present invention is based on these findings.

Accordingly, the gist of the invention resides in a thermoplastic resin composition which comprises 5 to 95 parts by weight of a modified polyolefin (A) or said modified polyolefin diluted with a polyolefin and 5 to 95 parts by weight of polyamide (B), said modified polyolefin being grafted with an unsaturated carboxylic acid or a derivative thereof and a silane compound.

The polyolefin in the present invention is a homopolymer of α-olefin such as ethylene, propylene, butene-1, pentene-1, hexene-1, and 4-methylpentene-1, or a copolymer of ethylene and α-olefin, or a copolymer of two or more of these α-olefins. It is a crystalline polymer. The copolymer comprehends random copolymers and block copolymers. These polymers may be used in combination with one another. Among the above-mentioned polyolefins, polypropylene and propylene-based polymers (such as propylene-α-olefin random or block copolymers) are preferable. In addition, the polyolefin may contain a small amount of olefin-based copolymer rubber such as ethylene-propylene rubber, ethylene-butene rubber, propylene-butene rubber, and ethylene-propylene-diene terpolymer rubber.

The modified polyolefin (A) in the present invention is one which is formed by grafting the above-mentioned polyolefin with an unsaturated carboxylic acid or a derivative thereof and a silane compound. The amount of the unsaturated carboxylic acid or derivative thereof is 0.001 to 10 wt%, preferably 0.05 to 5 wt%. The amount of the silane compound is 0.01 to 20 times, preferably 0.1 to 10 times, the molar quantity of the unsaturated carboxylic acid or derivative thereof grafted. If the amount of the unsaturated carboxylic acid and silane compound grafted is less than the above-specified range, the resulting composition is not improved in miscibility and physical properties.

Examples of the unsaturated carboxylic acid and derivative thereof include acrylic acid, maleic acid, fumaric acid, tetrahydrophthalic acid, itaconic acid, citraconic acid, crotonic acid, isocrotonic acid, endo-bicyclo[2.2.1]-5-heptene-2,3-dicarboxylic acid, acid anhydrides thereof, esters thereof, and metal salts thereof.

The silane compound is an organosilane compound represented by the formula $R(CH_2)_{x-1}Si(OR')_3$, where R is a functional group which has affinity for an unsaturated carboxylic acid or derivative thereof, R' is an alkyl or aryl group which may have a substituent group, and x has a value of 1 to 5. Examples of the functional group represented by R include amino group, epoxy group, mercapto group, ureido group, glycidoxy group, and anilino group. Examples of R' include methyl, ethyl, propyl, butyl, and $\beta$-methoxyethyl groups.

Examples of the organosilane compound include $\gamma$-aminopropyltriethoxysilane, $\gamma$-glycidoxypropyltrimethoxysilane, $\gamma$-mercaptopropyltrimethoxysilane, $\beta$-(3,4-epoxycyclohexyl)-ethyltrimethoxysilane, N-$\beta$-(aminoethyl)-$\gamma$-aminopropyltrimethoxysilane, $\gamma$-aminopropyltriethoxysilane, $\gamma$-ureid propyltriethoxysilane, and $\gamma$-anilinopropyltriethoxysilane.

The modified polyolefin (A) in the present invention can be produced by any known process. According to a method, the above-mentioned polyolefin is incorporated by dry-blending with an unsaturated carboxylic acid or a derivative thereof and an organic peroxide (such as di-t-butyl peroxide and 2,5-dimethyl-2,5-di-(t-butylperoxy)-hexyne-3) as a reaction initiator, and the resulting dry blend is melt-mixed. According to another method, a polyolefin is dissolved in a solvent and an unsaturated carboxylic acid or a derivative thereof and a reaction initiator are added to the solution for reaction, whereby the unsaturated carboxylic acid or derivative thereof is grafted to give a modified polyolefin. Subsequently, to the modified polyolefin is added the above-mentioned organosilane compound by dry-blending, followed by melt-mixing. The melt-mixing causes the organosilane compound to react with the unsaturated carboxylic acid or derivative thereof grafted to the polyolefin. Thus there is obtained the modified polyolefin (A) grafted with the two components. The modified polyolefin (A) can also be obtained by dry-blending a polyolefin, an unsaturated carboxylic acid or derivative thereof, an organic peroxide, and an organosilane compound all at once, followed by melt-mixing. The previously mentioned method is preferred.

The modified polyolefin (A) may be diluted with the above-mentioned polyolefin. The dilution ratio may be determined properly according to the amount of the unsaturated carboxylic acid and silane compound grafted to the modified polyolefin (A). After dilution, the diluted modified polyolefin (A) should contain the unsaturated carboxylic acid and silane compound in an amount specified above. Otherwise, the resulting compositionis not improved in miscibility and physical properties.

The polyamide (C) in the present invention is a polymeric compound having the acid amide (-CONH-) as the repeating unit. It is classified, according to the type of polymerization, into (1) one which is formed by ring-opening polymerization of lactam, (2) one which is formed by poly-condensation of aminocarboxylic acid, and (3) one which is formed by polycondensation of diamine and dibasic acid. They are called nylon by the generic name, and they include nylon-6, nylon-12, nylon-9, nylon-11, nylon-66, and nylon-610. Preferably among them are nylon-6 and nylon-66. The polyamide is not specifically limited in molecular weight; but the preferred molecular weight is one which corresponds to a relative viscosity ($n_{rel}$ ) higher than 0.5, preferably higher than 2.0.

The composition of the present invention is composed of the following components.

(A) Modified polyolefin or diluted product thereof: 5 to 95 wt%, preferably 20 to 90 wt%.

(B) Polyamide : 95 to 5 wt%, preferably 80 to 10 wt%.

If the amount of the modified polyolefin (A) or diluted product thereof is less than 5 wt%, the resulting composition is not improved in moisture resistance, chemical resistance, and miscibility. If the amount of the polyamide (B) is less than 5 wt%, the resulting composition is not improved in mechanical properties, heat resistance, and barrier properties ascribed to polyamide.

The composition of the invention may be prepared by mixing the above-mentioned modified polyolefin (A) and polyamide (B) in the specified mixing ratio. For example, the above-mentioned components are previously dry-blended by using a Henschel mixer, V-blender, ribbon blender, tumbler, or the like and then the resulting mixture is mixed in a single-or twin-screw extruder, Banbury mixer, roll mill, or the like at a temperature at which the resins melt. After melt-mixing the composition is pelletized or crushed.

The composition of the invention may be incorporated with a heat stabilizer, UV light absorber, nucleating agent, antistatic agent, slip agent, flame retardant, coloring agent, glass fiber, inorganic or organic filler, and the like in amounts not detrimental to the object of the invention.

During melt-mixing, reactions take place between the unsaturated carboxylic acid or derivative thereof grafted to a polyolefin and the organosilane compound having functional groups. The reactions induce partial grafting reaction between the modified polyolefin (A) having the alkoxysilyl group on the side chain and the polyamide (B), to impart good miscibility to the composition. When the composition is treated with water or steam, intermolecular crosslinking takes place in the composition, which improves the bonding of resin phases and increases the mechanical strength to a great extent.

## Examples

The invention is now described in more detail with reference to the following examples, in which parts and percent are based on weight. The test methods used in the examples are as follows:

(1)MFR: JIS K7210 (load 2.16 kg, 230°C)

(2) Tensile strength and tensile elongation at break: ASTM D638

(3) Flexural modulus: ASTM D790

## Example 1

### Preparation of modified polypropylene

100 parts by weight of homopolypropylene (MFR = 2.0 g/10 min, referred to as PP-1 hereinafter), 1 part of endo-bicyclo[2.2.1]-5-heptene-2,3-dicarboxylic anhydride, and 0.2 parts of organic peroxide [Perhexyne 25B, a product of Nippon Oils & Fats Co., Ltd.] were mixed at room temperature. The mixture was pelletized at 200°C by using a mixing extruder. The resulting acid-modified homopolypropylene (referred to as CMPP-1 hereinafter) has an MFR of 50 g/10 min and contains 0.3% of acid anhydride grafted.

Subsequently, 20 parts of CMPP-1, 80 parts of homopolypropylene (MFR = 3.5 g/10 min, referred to as PP-2 hereinafter), and an equimolar amount (for the acid anhydride in CMPP-1) of γ-aminopropyltriethoxysilane [A-1100, a product of Nippon Unicar Co., Ltd., referred to as SIL-1 hereinafter] were dry-blended, and the mixture was melt-mixed using a twin-screw extruder at 200°C to give pellets of acid-and silane-modified PP.

### Preparation of compositions

70 parts of the acid-and silane-modified PP obtained as mentioned above and 30 parts of nylon-6 [relative viscosity = 2.6, A1030BRL, a product of Unitica Ltd., referred to as NY-6 hereinafter] were preliminarily mixed at room temperature. The mixture was melt-mixed at 250°C using a twin-screw extruder. The thus obtained composition was made into test pieces for measurement of physical properties. The results are shown in Table 1.

### Treatment of composition with water

To 100 parts of the above-mentioned composition was added 0.1 parts of dibutyltin dilaurate by melt-mixing. The resulting composition was made into test pieces for measurement of physical properties. The test pieces were examined for physical properties after immersion in water at 50°C for 24 hours. The results are shown in Table 1.

### Examples 2 to 6

Compositions were prepared in the same manner as in Example 1 except that the amounts of CMPP-1, CMPP-2, acid-and silane-modified PP, and NY-6 were changed as shown in Table 1. The physical properties of the compositions are shown in Table 1.

### Examples 7 and 8

Compositions were prepared in the same manner as in Example 1 except that SIL-1 was replaced by N-β-(aminoethyl)-γ-aminopropyltrimethoxysilane [A-1120, a product of Nippon Unicar Co., Ltd., referred to as SIL-2 hereinafter) or γ-glycidoxypropyltrimethoxysilane [A-187, a product of Nippon Unicar Co., Ltd., referred to as SIL-3 hereinafter]. The physical properties of the compositions are shown in Table 1.

### Examples 9 and 10

Compositions were prepared in the same manner as in Example 1 except that unmodified PP-2 was replaced by propylene-ethylene block copolymer (ethylene content = 7%, MFR = 3.0 g/10 min, referred to as PP-3 hereinafter] or propylene-ethylene random copolymer (ethylene content = 3.2%, MFR = 9 g/10 min, referred to as PP-4 hereinafter]. The physical properties of the compositions are shown in Table 1.

### Example 11

A composition was prepared in the same manner as in Example 1 except that NY-6 was replaced by nylon-66 [Malanyl A-125, a product of Unitica Ltd., referred to as NY-66 hereinafter]. The physical properties of the composition are shown in Table 1.

### Example 12

A composition was prepared in the same manner as in Example 1 except that SIL-1 was used in an amount of 10 times the molar quantity of the acid grafted. The physical properties of the composition are shown in Table 1.

### Example 13

A composition was prepared in the same manner as in Example 1 except that CMPP-1, PP-2, NY-6, and SIL-1 were melt-mixed simultaneously. The physical properties of the composition are shown in Table 1.

### Examples 14 and 15

Compositions were prepared in the same manner as in Example 1 except that 30 parts of talc (average diameter of 5 μm) or glass fiber (13 μm in diameter, 3 mm long, chopped strand, referred to as GF hereinafter) was added for 100 parts of the resin. The physical properties of the compositions are shown in Table 1.

### Example 16

A composition was prepared in the same manner as in Example 1 except that the acid-modified propylene-ethylene block copolymer (amount of acid grafted = 0.3%, referred to as CMPP-2 hereinafter) was prepared from PP-3 instead of PP-1. The physical properties of the composition are shown in Table 1.

### Example 17

A composition was prepared in the same manner as in Example 1 except that the acid-and silane-modified PP was prepared without incorporating CMPP-1 with PP-2. The physical properties of the composition are shown in Table 1.

### Example 18

Acid-modified PP (amount of acid grafted = 0.08g, MFR = 20 g/10 min, referred to as CMPP-3 hereinafter) was prepared in the same manner as in Example 1 except that 100 parts of PP-1, 0.3 parts of acid anhydride, and 0.1 parts of organic peroxide were used.

Subsequently, CMPP-3 was modified with SIL-1 in an equimolar amount of the acid anhydride. A composition was prepared in the same manner as in Example 1 except that the acid-and silane-modified PP was used. The physical properties of the composition are shown in Table 1.

### Comparative Examples 1 to 4

Compositions were prepared in the same manner as in Examples 1 to 4 except that the organosilane compound was not used. The physical properties of the compositions are shown in Table 1.

### Comparative Example 5

A composition was prepared in the same manner as in Example 1 except that CMPP-1 was not used. The physical properties of the composition are shown in Table 1.

### Comparative Example 6

A composition was prepared in the same manner as in Example 1 except that SIL-1 was replaced by amyltriethoxysilane having no functions groups (referred to as SIL-4 hereinafter). The physical properties of the composition are shown in Table 1.

Table 1

| Example No. | 1 | 2 | 3 | 4 | 5 | 6 | 7 | 8 |
|---|---|---|---|---|---|---|---|---|
| **Acid- and silane-modified PP** | | | | | | | | |
| Acid-modified PP (parts) | CMPP-1 14 | CMPP-1 14 | CMPP-1 14 | CMPP-1 14 | CMPP-1 7 | CMPP-1 28 | CMPP-1 14 | CMPP-1 14 |
| PP (parts) | PP-2 56 | PP-2 36 | PP-2 76 | PP-2 16 | PP-2 63 | PP-2 42 | PP-2 56 | PP-2 56 |
| Silane compound (mol for acid) | SIL-1 equi | SIL-1 equi | SIL-1 equi | SIL-1 equi | SIL-1 equi | SIL-1 equi | SIL-2 equi | SIL-3 equi |
| % of acid- & silane-modified PP | 70 | 50 | 90 | 30 | 70 | 70 | 70 | 70 |
| Polyamide (%) | NY-6 30 | NY-6 50 | NY-6 10 | NY-6 70 | NY-6 30 | NY-6 30 | NY-6 30 | NY-6 30 |
| **Dry state** | | | | | | | | |
| Tensile strength (kg/cm²) | 495 | 820 | 420 | 930 | 520 | 400 | 495 | 470 |
| Elongation at break (%) | 22 | 20 | 35 | 11 | 17 | 11 | 26 | 28 |
| Flexural modulus (kg/cm²) | 19400 | 21500 | 16200 | 23200 | 20300 | 16500 | 19000 | 18800 |
| **After water treatment** | | | | | | | | |
| Tensile strength (kg/cm²) | 665 | 850 | 490 | 920 | 610 | 560 | 630 | 540 |
| Elongation at break (%) | 20 | 21 | 31 | 13 | 25 | 9 | 23 | 30 |
| Flexural modulus (kg/cm²) | 20300 | 21000 | 17500 | 21500 | 20500 | 16600 | 20100 | 18000 |

Table 1 (continued)

0 245 966

| Example No. | 9 | 10 | 11 | 12 | 13 | 14 | 15 | 16 |
|---|---|---|---|---|---|---|---|---|
| **Acid- and silane-modified PP** | | | | | | | | |
| Acid-modified PP (parts) | CMPP-1 14 | CMPP-1 14 | CMPP-1 14 | CMPP-1 14 | CMPP-1 14 | CMPP-1 14 | CMPP-1 14 | CMPP-2 14 |
| PP (parts) | PP-3 56 | PP-4 56 | PP-2 56 | PP-2 56 | PP-2 56 | PP-2 56 | PP-2 56 | PP-2 56 |
| Silane compound (mol for acid) | SIL-1 equi | SIL-1 equi | SIL-1 equi | SIL-1 10 | SIL-1 equi | SIL-1 equi | SIL-1 equi | SIL-1 equi |
| % of acid- & silane-modified PP | 70 | 70 | 70 | 70 | 70 | 70 | 70 | 70 |
| Polyamide (%) | NY-6 30 | NY-6 30 | NY-66 30 | NY-6 30 | NY-6 30 | NY-6 30 talc (30) (parts) | NY-6 30 GF (30) (parts) | NY-6 30 |
| **Dry state** | | | | | | | | |
| Tensile strength (kg/cm²) | 400 | 330 | 540 | 490 | 465 | 520 | 1380 | 490 |
| Elongation at break (%) | 23 | 30 | 12 | 21 | 21 | 6 | 4 | 25 |
| Flexural modulus (kg/cm²) | 16100 | 13300 | 23500 | 19600 | 19300 | 40800 | 58600 | 19000 |
| **After water treatment** | | | | | | | | |
| Tensile strength (kg/cm²) | 560 | 510 | 705 | 575 | 605 | 635 | 1210 | 660 |
| Elongation at break (%) | 21 | 19 | 10 | 18 | 23 | 6 | 5 | 25 |
| Flexural modulus (kg/cm²) | 17000 | 14100 | 25600 | 21100 | 19600 | 39300 | 56200 | 20100 |

Table 1  (continued)

0 245 966

| Example No. | 17 | 18 | 1 * | 2 * | 3 * | 4 * | 5 * | 6 * |
|---|---|---|---|---|---|---|---|---|
| **Acid- and silane-modified PP** | | | | | | | | |
| Acid-modified PP | CMPP-1 | CMPP-3 | CMPP-1 | CMPP-1 | CMPP-1 | CMPP-1 | – | CMPP-1 |
| (parts) | 30 | 70 | 14 | 14 | 14 | 14 | – | 14 |
| PP | – | – | PP-2 | PP-2 | PP-2 | PP-2 | PP-2 | PP-2 |
| (parts) | – | – | 76 | 56 | 36 | 16 | 70 | 56 |
| Silane compound | SIL-1 | SIL-1 | – | – | – | – | SIL-1 | SIL-4 |
| (mol for acid) | equi | equi | – | – | – | – | equi | equi |
| % of acid- & silane-modified PP | 30 | 70 | 90 | 70 | 50 | 30 | 70 | 70 |
| Polyamide | NY-6 | NY-6 | NY-6 | NY-6 | NY-6 | NY-6 | NY-6 | NY-6 |
| (%) | 70 | 30 | 10 | 30 | 50 | 70 | 30 | 30 |
| **Dry state** | | | | | | | | |
| Tensile strength (kg/cm$^2$) | 810 | 515 | 380 | 490 | 615 | 690 | 330 | 420 |
| Elongation at break (%) | 7 | 26 | 40 | 20 | 31 | 15 | 7 | 19 |
| Flexural modulus (kg/cm$^2$) | 21300 | 19900 | 16000 | 19000 | 21000 | 22300 | 16000 | 18800 |
| **After water treatment** | | | | | | | | |
| Tensile strength (kg/cm$^2$) | 860 | 695 | 370 | 415 | 450 | 500 | 320 | 417 |
| Elongation at break (%) | 9 | 23 | 43 | 39 | 41 | 45 | 8 | 37 |
| Flexural modulus (kg/cm$^2$) | 20700 | 20500 | 15500 | 16000 | 15800 | 14200 | 15000 | 15900 |

* Comparative Examples

## Effect of the invention

The composition of the invention is improved over the conventional one in miscibility of polyolefin and polyamide and also in mechanical properties, especially tensile strength and stiffness, ascribed to the intermolecular crosslinking. In addition, it is also improved in paintability, adhesion, and miscibility with fillers owing to the organosilane compound.

On account of the above-mentioned characteristic properties, the composition of the invention is suitable as industrial materials, especially for automobiles and household electric appliance.

## Claims

1. A thermoplastic resin composition which comprises 5 to 95 parts by weight of a modified polyolefin (A) or said modified polyolefin diluted with a polyolefin and 5 to 95 parts by weight of polyamide (B), said modified polyolefin being grafted with an unsaturated carboxylic acid or a derivative thereof and a silane compound.

2. A process for producing a thermoplastic resin composition which comprises preparing a mixture composed of 5 to 95 parts by weight of a modified polyolefin (A) or said modified polyolefin diluted with a polyolefin and 5 to 95 parts by weight of polyamide (B), said modified polyolefin being grafted with an unsaturated carboxylic acid or a derivative thereof and a silane compound, and subsequently melt-mixing said mixture.